# EUROPEAN PATENT SPECIFICATION

(11) **EP 0 625 862 B1**
(45) Date of publication and mention of the grant of the patent: **08.08.2001**
(21) Application number: 94401100.6
(22) Date of filing: 18.05.1994
(51) Int. Cl.: H04Q 3/00, H04M 11/06, H04N 1/32

(54) **Network control apparatus**
Steuerungsvorrichtung für Netzwerke
Appareil de commande de réseau

(30) Priority: 19.05.1993 JP 13999193
(43) Date of publication of application: 23.11.1994
(73) Proprietor: CANON KABUSHIKI KAISHA, Tokyo (JP)
(72) Inventor: Ezumi, Yosuke, c/o Canon Kabushiki Kaisha, Tokyo (JP)
(74) Representative: Rinuy, Santarelli

(56) References cited:
- CA-A- 1 315 429
- FR-A- 2 316 812
- FR-A- 2 495 866
- ELEKTRONIK, vol. 31, no. 23, November 1982, MUNCHEN DE, pages 84-88, XP002014377 D.M. TAYLOR ET AL.: "Einchip-FSK-Baustein vereinfacht Modem-Aufbau"
- EDN ELECTRICAL DESIGN NEWS, vol. 29, 1984, NEWTON, MASSACHUSETTS US, pages 161-170, XP002014378 R. CHIRAYIL ET AL.: "IC- Modem/Phone-Network interfaces meet FCC isolation, protection rules "
- WESCON TECHNICAL PAPERS, vol. 26, September 1992, NORTH HOLLYWOOD US, pages 23/2 1-15, XP002014379 S.J. DURHAM ET AL.: "integrated modem components"

## Description

### BACKGROUND OF THE INVENTION

### Field of the Invention

The present invention relates to a network control apparatus for performing a direct current capture or the like of a communication line for a communication terminal to communicate the signal which was modulated in accordance with communication data.

### Related Background Art

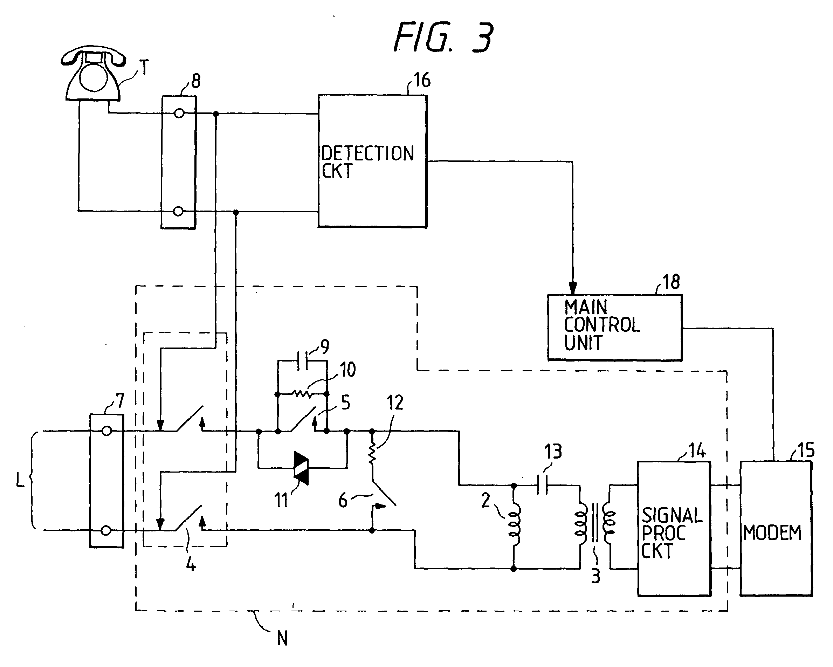

Fig. 3 is a circuit diagram showing a construction of a main section of a conventional network control apparatus. A network control apparatus N is connected to a terminal 7 to which a telephone line L is connected. A main control unit 18 of a facsimile apparatus is connected to the network control apparatus N through a modem 15. A switching relay 4 is provided on the terminal 7 side of the network control apparatus N. A telephone T is connected to the switching relay 4 through a terminal 8. A detection circuit 16 to detect a call signal is connected to the terminal 8. A spark killer in which a capacitor 9, a resistor 10, and a varistor 11 are mutually connected in parallel is serially connected at the post stage of the relay 4, thereby preventing the generation of a spark at the time of operation of the facsimile apparatus.

A pulse relay 5 is connected in parallel with the spark killer. A shunt relay 6 is connected in parallel with the post stage of the pulse relay 5. A retardation coil (RET coil) 2 is connected in parallel with the post stage of the shunt relay 6. A blocking capacitor 13 is serially connected to the post stage of the RET coil 2.

A primary winding of a transformer 3 is connected to the post stage of the capacitor 13. A signal processing circuit 14 to convert the signal level and filter the signal is connected to both ends of a secondary winding of the transformer 3. The modem 15 is connected to the signal processing circuit 14. A main control unit 18 of the facsimile apparatus is connected to the modem 15.

The receiving operation of the conventional facsimile apparatus with such a construction will now be described. When the detection circuit 16 detects a call signal, a detection signal is output from the detection circuit 16. The switching relay 4 is energized by the detection signal, so that its contact is closed and the facsimile apparatus is set into a receiving operation state.

In the receiving operation state, an image signal which is transmitted from a terminal on the partner side through the telephone line L is input from the terminal 7 through the switching relay 4 and pulse relay 5. The input of the multiplexed DC component of the image signal to the transformer 3 is blocked by the blocking capacitor 13. The DC component flows into the retardation coil 2. Only the AC component is transformed by the transformer 3 and, after that, it is input to the signal processing circuit 14. The signal processing circuit 14 adjusts the signal level of the image signal and executes the filtering operation to cut off a high frequency component. The image signal is input to the modem 15.

The modem 15 demodulates the input image signal, thereby obtaining a DC image signal. The DC image signal is input to the main control unit 18. The information of the image signal is recorded onto a recording paper.

In the network control apparatus of Fig. 3 mentioned above, when the polarity of the signal on the telephone line L is inverted, the direction of the DC component of the image signal flowing in the RET coil -2 is inverted. Therefore, at the time of inversion of the polarity, a transient current flowing in the RET coil 2 largely changes.

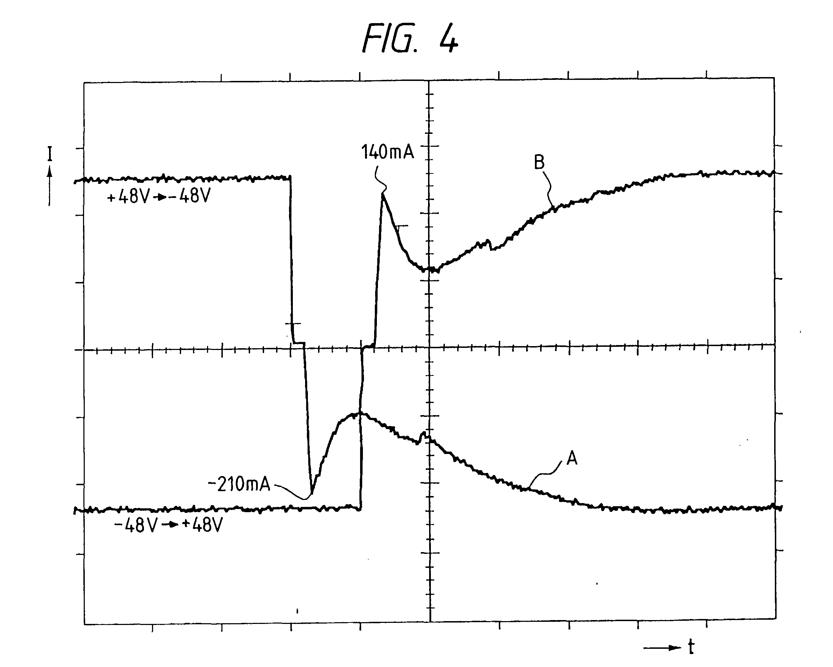

Fig. 4 is a characteristics diagram showing a transient phenomenon at the time of polarity inversion on the telephone line L in the conventional network control apparatus. Fig. 4 shows a transient characteristics curve A in the case where the DC level of the image signal changes from +48V to -48V at the time of polarity inversion and a transient characteristics curve B in the case where the DC level changes from -48V to +48V. In the transient characteristics curve A, even after a current peak value of about -210 mA occurred, the current value largely changes. In the transient characteristics curve B, even after a current peak value of about 140 mA occurred, the current value largely changes. In order to prevent that a switchboard causes an erroneous operation due to a large current fluctuation which transiently occurs, hitherto, by using a special coil of a small inductance as a retardation coil 2, the current fluctuation at the time of transient state is settled within a predetermined value.

Therefore, the costs of parts rise due to the use of the special coil and it is also necessary to select parts of special standards as the other component parts in correspondence to the special coil. There are consequently problems such that the circuit construction is complicated and the whole manufacturing costs increase.

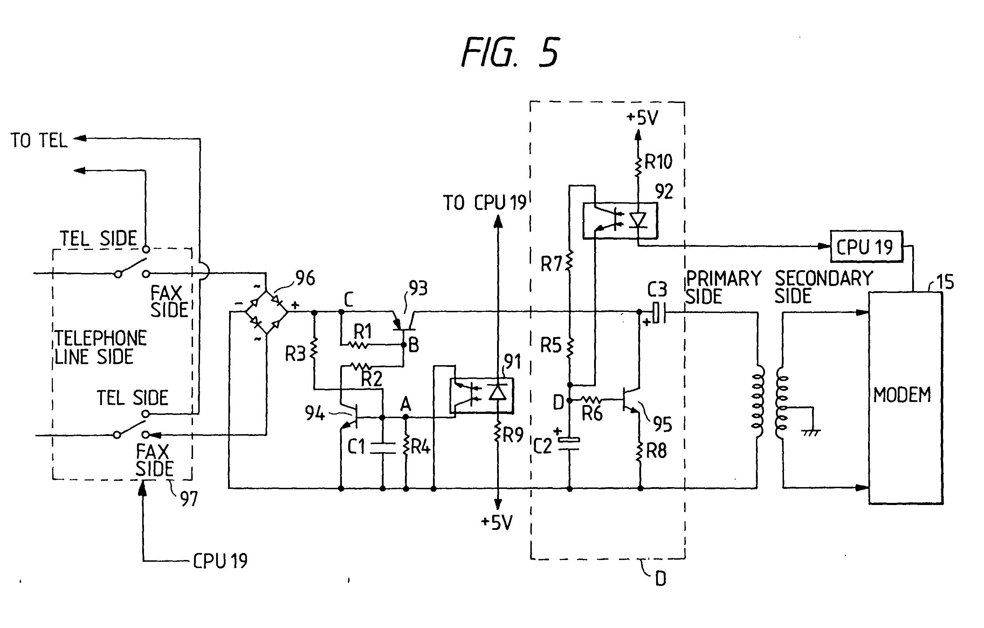

Fig. 5 is a circuit diagram of another conventional network control apparatus which is constructed by using semiconductor parts in place of the conventional relays and coils.

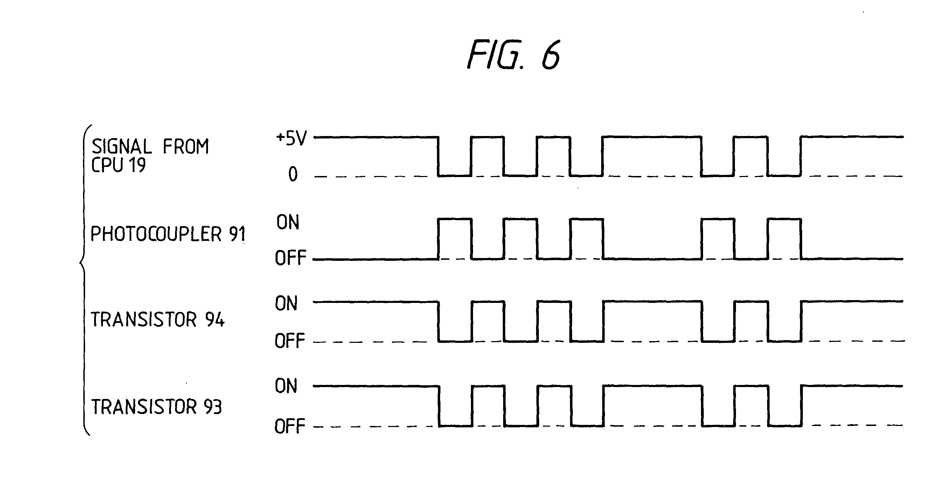

A photocoupler 91 is turned on or off by a signal which is supplied from a CPU 19, thereby turning on or off transistors 94 and 93 and forming a dial pulse. Explaining further in detail, when the signal from the CPU 19 is set to 0V (low level), a current flows to the diode side of the photocoupler 91. The photocoupler 91 is turned on and the potential at a point A drops to the GND level. Therefore, the transistor 94 is turned off, no current flows in resistors R1 and R2, and the potential at a point B is equal to the magnitude of the voltage which is applied from the telephone line (namely, the potentials at points B and C are equal). Thus, the transistor 93 is turned off and a DC loop is disconnected. When the signal from the CPU 19 is set to 5V (high level), the photocoupler 91 is turned off, the potential at the point A is equal to the magnitude of the voltage which is applied to a resistor R4, and the transistor 94 is turned on. Therefore, the potential at the point B is lower than the potential at the point C, the transistor 93 is turned on, and the DC loop is held in this state. Fig. 6 shows a time chart for those operations. The reason why two transistors are used here is to smoothly perform the current control. (The transistor 94 functions to drive a base current of the transistor 93.)

The portion of a transistor 95 in the circuit of Fig. 5 is used in place of a coil for holding the DC loop. At the time of DC capture, current flows in resistors R5 and R6, a capacitor C2 is charged, the potential at a point D becomes constant, and the transistor 95 is held in the ON state. Thus, the DC loop is closed. A magnitude of the current is determined by values of ON resistances of the transistors 93 and 95 and a diode bridge 96. Resistors having ON resistances such as to keep the current value of the DC loop must be used.

As mentioned above, when the DC loop is formed, a leading waveshape of the DC loop is deformed. Such a distortion is caused by an influence of the capacitor C2. As a resistor R5 shown in Fig. 5, the resistor having a fairly large resistance value is used in order to increase an impedance. However, the DC waveshape is influenced because a charging speed of the capacitor C2 is delayed due to such a large resistance R5. The photocoupler 92 is used in order to compensate such a delay. By turning on the photocoupler 92, the charging speed of C2 increases (R5 > R7), thereby reducing the influence by the C2.

Accordingly, by turning on the photocoupler 92 just before the DC is captured, a distortion of the leading waveshape of the DC loop is eliminated. When the DC loop is closed and the charging of C2 is completed, the photocoupler 92 is turned off. This is because when the photocoupler 92 is held in the ON state, the impedance on the primary side decreases and doesn't match with the impedance (600Ω) on the secondary side.

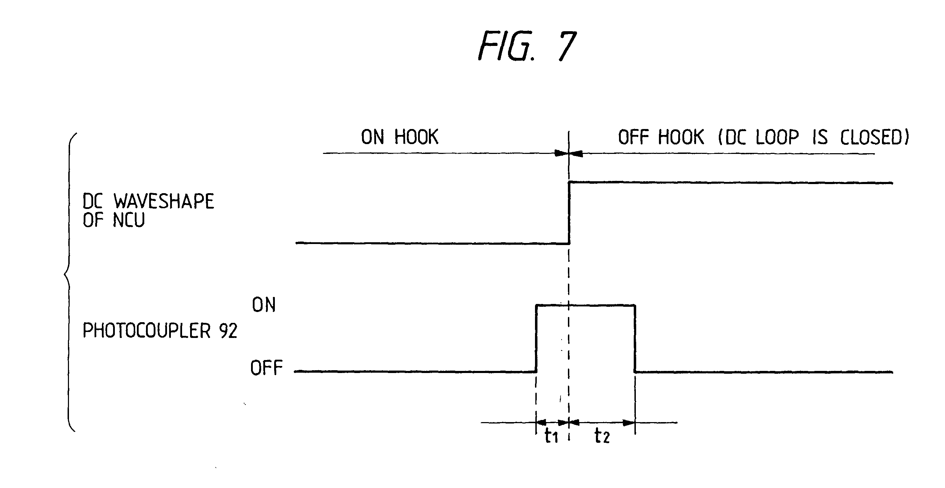

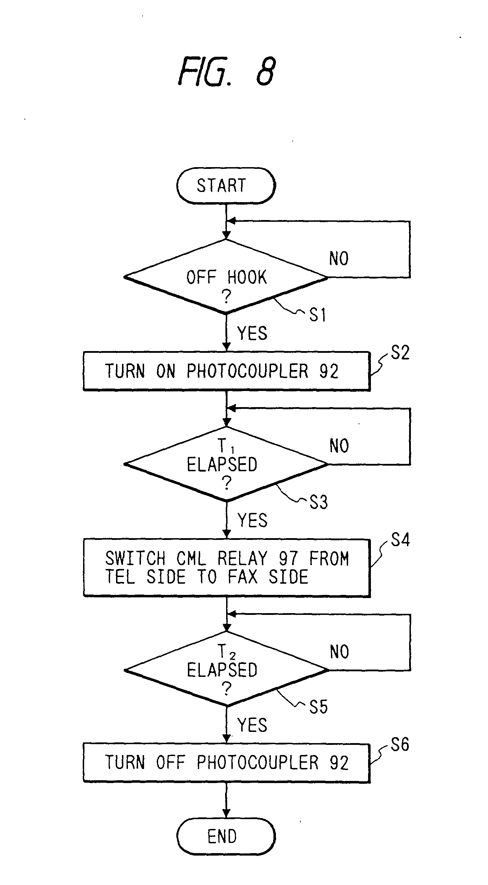

Fig. 7 shows a time chart for those operations. A time duration of t1 in Fig. 7 can be set to an arbitrary value so long as it is located just before the DC capture. t2 denotes a time which is required until the charging of C2 is completed. Fig. 8 shows a flowchart for controlling those operations.

First, in step S1, a check is made to see if an off hook has been instructed by a key (not shown) or a detection of a call signal or not. Specifically speaking, for example, a check is made to see if an off hook key, a one-touch dial key, or a reduction dial key has been depressed or not or if the call signal from the line has been detected or not. When the off hook is instructed, the photocoupler 92 is turned on in step S2. In step S3, a check is made to see if the time tl has elapsed after the turn-on of the photocoupler 92 or not. After the elapse of t1 time, a CML relay 97 is switched from the telephone side (TEL side) to the facsimile side (FAX side) in step S4. In step S5, a check is made to see if the t2 time has elapsed after the CML relay 97 had been switched from the TEL side to the FAX side or not. After the elapse of t2 time, the photocoupler 92 is turned off in step S6.

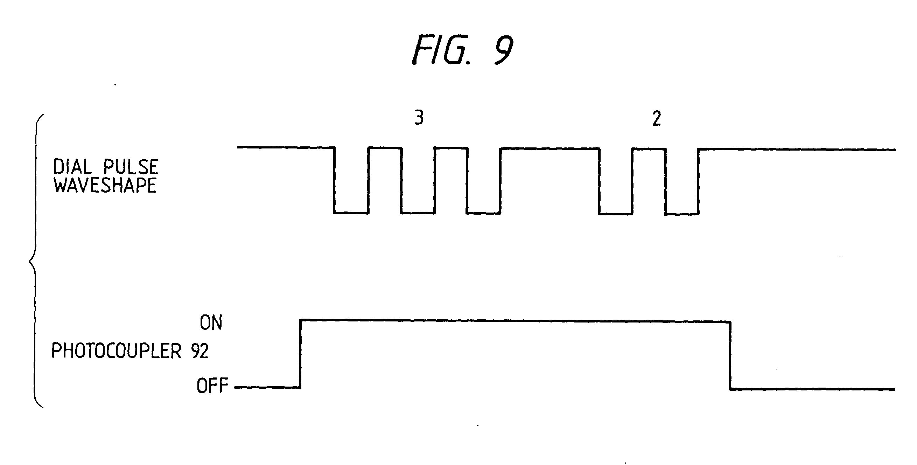

In case of dialing (call generation) by a dial pulse subsequent to the formation of the above DC loop, as shown in a time chart of Fig. 9, the CPU 19 first turns on the photocoupler 92 and performs the on/off control of the photocoupler 91 in accordance with dial data after that. This is because since the capacitor C2 exerts an influence on the waveshape of the dial pulse when the dial pulse is generated, the waveshape of the dial pulse is compensated by the photocoupler 92. When the dialing operations of all dial data are finished, the photocoupler 92 is turned off and the call generation is finished.

In the conventional apparatus of Fig. 5, however, the construction is complicated as shown in the portion D in Fig. 5 and it is necessary to adjust the leading timing. Further, there are problems such that the DC resistance is high and the apparatus cannot be used in dependence on the specification of the exchange network which is connected.

Document CA-A-1 315 429 discloses a device for coupling either a telephone or a facsimile terminal to a single telephone line.

The device comprises a rectifier bridge and coils. One of the coils is connected to the rectifier bridge in series with the facsimile terminal. The connection of these elements is not the same as in the present invention, and consequently, this coil does not have the function of capturing a direct current in order that an AC current is supplied to the facsimile terminal.

Document FR-A-2 495 866 discloses a device to match a modem to a telephone line. This device comprises a rectifier bridge connected to a circuit in parallel with an impedance similar to the input impedance of a modem. The function of the circuit is to regulate the direct component of the current flowing through the device.

However, the structure of this circuit is more complex than the coil of the present invention. As a matter of fact, this circuit comprises a transistor, several resistors, a diode and a capacitor.

### SUMMARY OF THE INVENTION

It is an object of the invention to simplify a construction to prevent the erroneous operation of a switchboard.

Another object of the invention is to simplify a construction to suppress a transient response at the time of polarity inversion.

Still another object of the invention is to provide a network control apparatus which can suppress a transient response at the time of polarity invertion irrespective of the specification of a switchboard which is connected.

The above objects are achieved by a network as claimed in claim 1.

The above and other objects and features of the present invention will become apparent from the following detailed description and the appended claims with reference to the accompanying drawings.

### BRIEF DESCRIPTION OF THE DRAWINGS

Fig. 1 is a circuit diagram showing a construction of an embodiment of the present invention;
Fig. 2 is a characteristics diagram showing transient phenomena at the time of polarity inversion of a telephone line in the embodiment;
Fig. 3 is a circuit diagram showing a construction of a main section of a conventional network control apparatus;
Fig. 4 is a characteristics diagram showing transient phenomena at the time of polarity inversion of a telephone line of the conventional network control apparatus;
Fig. 5 is a circuit diagram of another conventional apparatus;
Fig. 6 is a timing chart when a dial pulse is formed in another conventional apparatus;
Fig. 7 is a timing chart when a leading waveshape of a DC loop at the time of off hook is shaped in another conventional apparatus;
Fig. 8 is a flowchart for controlling the operation to shape the leading waveshape of the DC loop at the time of off hook in another conventional apparatus; and
Fig. 9 is a timing chart in case of compensating a waveshape when a dial pulse is generated in another conventional apparatus.

### DETAILED DESCRIPTION OF THE PREFERRED EMBODIMENT

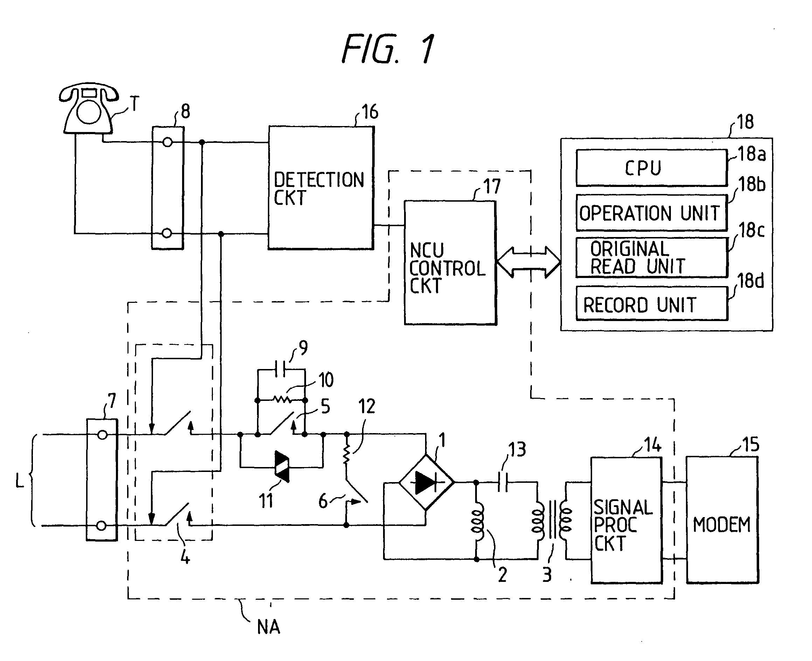

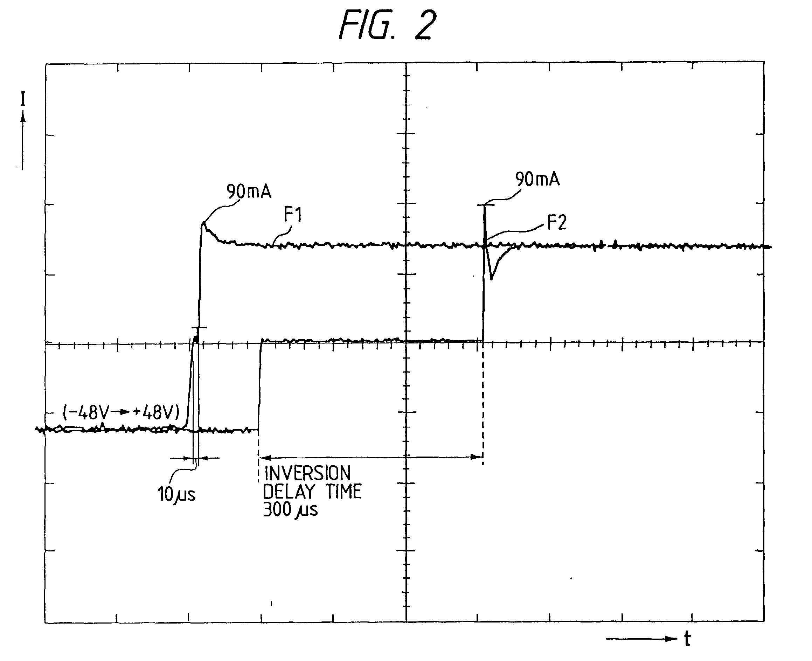

An embodiment of the present invention will now be described hereinbelow with reference to Figs. 1 and 2. Fig. 1 is a circuit diagram showing a construction of an embodiment of the invention. In Fig. 1, the same portions as those described and shown in Fig. 3 are designated by the same reference numerals. Fig. 2 is a characteristics diagram of transient phenomena at the time of polarity inversion of a telephone line in the embodiment.

As shown in Fig. 1, in a network control apparatus NA of the embodiment, a diode bridge 1 is connected as a rectifying circuit to the front stage of the RET coil 2 for the conventional network control apparatus N which has already been described with reference to Fig. 3. In Fig. 1, constructions of the network control apparatus and a main control unit of the facsimile apparatus which were omitted in Fig. 3 are clearly shown. An NCU control circuit 17 is provided for the network control apparatus NA. The detection circuit 16, signal processing circuit 14, and modem 15 are connected to the NCU control circuit 17. The main control unit 18 of the facsimile apparatus is connected to the NCU control circuit 17. The main control unit 18 comprises: a CPU 18a to control the whole operation; an operation unit 18b to operate in the operating mode; an original read unit 18c to read an original; and a record unit 18d to record information based on a facsimile signal onto a recording paper. The detailed descriptions of constructions of the other portions of the embodiment are omitted here because they are substantially the same as those of the conventional network control apparatus which has already been described with reference to Fig. 3.

In the above construction, when the detection circuit 16 detects a call signal, a detection signal is supplied from the detection circuit 16 to the NCU control circuit 17. In accordance with the detection signal, the NCU control circuit 17 energizes the switching relay 4 and closes the contact, so that the facsimile apparatus is set into a receiving operation state.

In the receiving operation state, the image signal which is supplied from a terminal on the partner side through the telephone line L is input from the terminal 7 to the diode bridge 1 through the switching relay 4 and pulse relay 5. The diode bridge 1 rectifies the input image signal. The multiplexed DC component in the image signal is blocked by the blocking capacitor 13 and flows in the retardation coil 2. The AC component of the image signal is transformed by the transformer 3 and input to the signal processing circuit 14. The signal processing circuit 14 adjusts the level of the image signal and performs a filtering process to cut off the high frequency component. The image signal which was processed as mentioned above is input to the modem 15.

In the modem 15, the image signal is demodulated. The demodulated digital image signal is input to the main control unit 18 through the NCU control circuit 17. The information of the digital image signal is recorded onto the recording paper by the record unit 18d in accordance with a command from the CPU 18a.

On the other hand, in the transmitting mode, a transmission original is set to the apparatus and the operation unit 18b is operated so as to set the apparatus into the transmitting mode. Thus, the switching relay 4 is energized by the NCU control circuit 17 and its contact is closed. The shunt relay 6 is also energized and its contact is closed. The pulse relay 5 is opened or closed. A dial pulse corresponding to a make resistor 12 is generated and the terminal on the partner side is called.

When the call generation is finished, the pulse relay 5 is energized by the NCU control circuit 17, its contact is closed, the shunt relay 6 is deenergized, and its contact is opened. After that, a procedure signal is communicated. The transmission original is read by the original read unit 18c of the main control unit 18. The digital image signal of the original image is supplied to the modem 15 through the NCU control circuit 17. The digital image signal is modulated by the modem 15. The modulated image signal is subjected to signal processes such as level adjustment, filtering to cut of the high frequency component, and-the like by the signal processing circuit 14. The processed signal is transmitted from the terminal 7 to the partner side terminal via the telephone line L through the transformer 3, capacitor 13, diode bridge 1, pulse relay 5, and switching relay 4.

In the embodiment, in the facsimile operating state, the multiplexed DC component in the reception signal is cut off by the capacitor 13. The DC component passes from the plus side of the diode bridge 1 through the RET coil 2 and flows to the minus side of the diode bridge 1. As mentioned above, a current in the same direction always flows in the RET coil 2 by the rectifying operation of the diode bridge 1. Therefore, even when the polarity is inverted on the telephone line L, a transient current flowing at the time of polarity inversion is in the same direction and its value is suppressed to a small value.

Fig. 2 is a characteristics diagram of transient phenomena at the time of polarity inversion of the telephone line when they were actually measured in the embodiment. In the case where the DC level of the image signal changes from -48V to +48V, the transient characteristics when the DC level changed to +48V become as shown in a curve F1 after the elapse of time of 10 µsec from a time point when the DC level reaches 0V from -48V. The transient characteristics when the DC level changes to +48V become as shown in a curve F2 after the elapse of time of 300 µsec from a time point when the DC level reaches 0V from -48V. In any of the above cases, as compared with the conventional transient characteristics which have already been described with reference to Fig. 4, the peak current value is so small to be about 90 mA, a current fluctuation in the transient state is also stabilized in a short time, and a transient fluctuation is extremely small. It will be obviously understood that the occurrence of an erroneous operation of a switchboard can be prevented.

As mentioned above, according to the embodiment, the following advantages are obtained. Namely, at the time of polarity inversion of the telephone line L, the transient current flowing in the retardation coil 2 can be extremely reduced. An ordinary coil can be used as a retardation coil 2. Parts of the ordinary standards can be also used as the other circuit component parts. A construction is simple. The manufacturing costs are not raised. An erroneous operation of the switchboard doesn't occur at the time of polarity inversion of the telephone line, and the like.

Although the above embodiment has been described with respect to the construction in which the network control apparatus of the invention is connected to the facsimile apparatus, the invention is not limited to such a construction. The invention can be also applied to the case where the network control apparatus of the invention is connected to other communication terminal apparatuses such as telephone, personal computer, and the like.

## Claims

1. A network control apparatus having a rectifying circuit (1) provided between a communication line (L) and the primary side of a tranformer (3), and communicating means (15) connected to the secondary side of the transformer,
characterized in that a coil (2) is connected to the both ends of the primary side of said transformer and both ends of the post stage of the said rectifying circuit and the said coil is in parallel with said communicating means, for capturing a direct current on the communication line, and in that the current captured by said coil has a predetermined direction irrespective of the polarity of the communication line.

2. An apparatus according to claim 1, further comprising a transformer (3) provided in parallel between said coil and said communicating means and a capacitor (13) provided in series between said coil and said transformer.

3. An apparatus according to claim 1, further comprising a shunt relay (6) provided in parallel between the communication line and said rectifying circuit and a pulse relay (5), provided in series between the communication line and said shunt relay, for generating a dial pulse.

4. An apparatus according to claim 1, further comprising switch means (4) for connecting or disconnecting the communication line and said rectifying circuit, and wherein the direct current on the communication line is captured by said coil in a state where the communication line and said rectifying circuit are connected.

5. An apparatus according to claim 4, wherein said switch means connects the communication line and a telephone set (T) in a case where the communication line and said rectifying circuit are disconnected.

## Patentansprüche

1. Netzsteuergerät mit einer zwischen einer Kommunikationsleitung (L) und der Primärseite eines Transformators (3) vorgesehenen Gleichrichtungsschaltung (1) und einer mit der Sekundärseite des Transformators verbundenen Kommunikationseinrichtung (15),
**dadurch gekennzeichnet, dass**
eine Spule (2) zur Erlangung eines Gleichstroms auf der Kommunikationsleitung mit beiden Enden der Primärseite des Transformators und beiden Enden der hinteren Stufe der Gleichrichtungsschaltung verbunden ist, und dass der durch die Spule erlangte Strom unabhängig von der Polarität der Kommunikationsleitung eine vorbestimmte Richtung aufweist.

2. Gerät nach Anspruch 1, ferner mit einer zwischen der Spule und dem Transformator in Serie geschalteten Kapazität (13).

3. Gerät nach Anspruch 1, ferner mit einem zwischen der Kommunikationsleitung und der Gleichrichtungsschaltung parallel geschalteten Shunt-Relais (6) und einem zwischen der Kommunikationsleitung und dem Shunt-Relais in Serie geschalteten Impuls-Relais (5) zur Erzeugung eines Wählimpulses.

4. Gerät nach Anspruch 1, ferner mit einer Schalteinrichtung (4) zum Verbinden oder Trennen der Kommunikationsleitung und der Gleichrichtungsschaltung, wobei der Gleichstrom auf der Kommunikationsleitung durch die Spule in einem Zustand erlangt wird, in dem die Kommunikationsleitung und die Gleichrichtungsschaltung verbunden sind.

5. Gerät nach Anspruch 4, wobei die Schalteinrichtung die Kommunikationsleitung und eine Telefonanlage (T) in einem Fall verbindet, in dem die Kommunikationsleitung und die Gleichrichtungsschaltung getrennt sind.

## Revendications

1. Dispositif de commande de réseau comportant un circuit redresseur (1) disposé entre une ligne (L) de transmission et le côté primaire d'un transformateur (3), et un moyen (15) de transmission connecté au côté secondaire du transformateur,
caractérisé en ce qu'une bobine (2) est connectée aux deux extrémités du côté primaire dudit transformateur et aux deux extrémités de l'étage postérieur dudit circuit redresseur pour capter un courant continu sur la ligne de transmission, et en ce que le courant capté par ladite bobine a un sens prédéterminé quelle que soit la polarité de la ligne de transmission.

2. Dispositif selon la revendication 1, comprenant en outre un condensateur (13) disposé en série entre ladite bobine et ledit transformateur.

3. Dispositif selon la revendication 1, comprenant en outre un relais (6) de shunt disposé en parallèle entre la ligne de transmission et ledit circuit redresseur et un relais impulsionnel (5) disposé en série entre la ligne de transmission et ledit relais de shunt pour engendrer une impulsion de cadran.

4. Dispositif selon la revendication 1, comprenant en outre un moyen (4) de commutation destiné à connecter ou déconnecter la ligne de transmission et ledit circuit redresseur, [et] dans lequel le courant continu sur la ligne de transmission est capté par ladite bobine dans un état où la ligne de transmission et ledit circuit redresseur sont connectés.

5. Dispositif selon la revendication 4, dans lequel ledit moyen commutateur connecte la ligne de transmission et un poste (T) de téléphone dans le cas où la ligne de transmission et ledit circuit redresseur sont déconnectés.
